Europäisches Patentamt

European Patent Office

Office européen des brevets

(19)

(11) Numéro de publication: **0 081 409**
**B1**

(12) **FASCICULE DE BREVET EUROPEEN**

(45) Date de publication du fascicule du brevet:
21.08.85

(51) Int. Cl.⁴: **C 04 B 35/52, C 04 B 41/82**

(21) Numéro de dépôt: **82402129.9**

(22) Date de dépôt: **23.11.82**

(54) Procédé de densification d'une structure poreuse.

(30) Priorité: **26.11.81 FR 8122163**

(43) Date de publication de la demande:
**15.06.83 Bulletin 83/24**

(45) Mention de la délivrance du brevet:
**21.08.85 Bulletin 85/34**

(84) Etats contractants désignés:
**BE CH DE GB IT LI NL SE**

(56) Documents cités:
**CH - A - 410 882**
**LU - A - 34 111**

(73) Titulaire: **COMMISSARIAT A L'ENERGIE ATOMIQUE**
**Etablissement de Caractère Scientifique Technique et
Industriel, 31/33, rue de la Fédération, F-75015 Paris (FR)**

(72) Inventeur: **Houdayer, Michel, 9, Avenue Duquesne,
F-75007 Paris (FR)**
Inventeur: **Spitz, Jean, "Les Martinets", F-38610 Gieres
(FR)**
Inventeur: **Tran-van, Danh, 255 A Cidex Crolles,
F-38190 Brignoud (FR)**

(74) Mandataire: **Mongrédien, André et al, c/o
BREVATOME 25, rue de Ponthieu, F-75008 Paris (FR)**

EP 0 081 409 B1

## Description

La présente invention a pour objet un procédé de densification d'une structure poreuse. Ce procédé consiste à combler les vides de la structure poreuse en introduisant dans cette dernière un matériau identique ou différent de celui constituant la structure, le remplissage des vides de la structure entraînant une augmentation de la densité de celle-ci, ce qui justifie le mot »densification«.

L'invention s'applique en particulier à la densification de tissus ou feutres bi ou tri-directionnels pouvant être avantageusement utilisés, du fait de leur résistance mécanique élevée, de leur pouvoir isolant thermique excellent et de leur bonne résistance aux chocs et à l'abrasion, pour la réalisation de disques de freins.

Les méthodes de densification généralement utilisées consistent, soit à plonger la structure à densifier dans un bain liquide de brai ou de résines pyrolysables puis à pyrolyser le brai ou la résine de façon à rigidifier l'ensemble, soit à placer la structure à densifier dans un courant de gaz tel que dans un courant d'hydrocarbures gazeux puis à porter l'ensemble à une température élevée, par exemple de façon à craquer les hydrocarbures gazeux de façon à obtenir du carbone ou du graphite pyrolytique pouvant se déposer dans les vides de la structure.

Une autre méthode connue de densification consiste à chauffer la structure poreuse à densifier en présence d'un hydrocarbure liquide de façon à former, par décomposition de l'hydrocarbure, du carbone ou du graphite pyrolytique pouvant se déposer à l'intérieur des pores de la structure.

Malheureusement, le temps nécessaire à la mise en oeuvre de ces procédés est généralement très long lorsque l'on désire obtenir une structure de densité élevée.

L'invention a pour objet un nouveau procédé de densification d'une structure poreuse permettant d'obtenir une structure à densité élevée en un temps beaucoup plus court que celui nécessaire à la densification effectuée selon les procédés de l'art antérieur.

De façon plus précise, l'invention a pour objet un procédé de densification d'une structure poreuse par chauffage de la structure en présence d'un hydrocarbure liquide de façon à former, par décomposition de l'hydrocarbure, du carbone ou du graphite pyrolytique pouvant se déposer à l'intérieur des pores de la structure, caractérisé en ce que l'on immerge la structure dans l'hydrocarbure liquide et en ce que l'on chauffe l'ensemble par induction.

Ce procédé s'applique, mais non exclusivement, à la densification de structure poreuse en carbone ou en graphite.

Selon un mode préféré de mise en oeuvre du procédé de l'invention, la structure poreuse immergée dans l'hydrocarbure liquide est chauffée à une température comprise entre 1000 et 1300° C.

Selon un autre mode préféré de mise en oeuvre du procédé de l'invention, l'hydrocarbure liquide est du cyclohexane.

D'autres caractéristiques et avantages de l'invention ressortiront mieux de la description qui suit, donnée à titre purement illustratif mais non limitatif, en référence aux figures annexées sur lesquelles:
— la figure 1 représente, schématiquement, un dispositif permettant la mise en oeuvre du procédé de l'invention,
— la figure 2 représente des courbes donnant la densité d'une structure densifiée en fonction du temps t, exprimé en heure (h); la courbe a correspond à une densification selon l'invention, et la courbe b correspond à une densification par dépôt en phase gazeuse.

Selon l'invention, le procédé consiste à immerger une structure poreuse réalisée par exemple en carbone ou en graphite dans un hydrocarbure liquide comme par exemple du cyclohexane et à chauffer l'ensemble par induction de préférence à une température comprise entre 1000 et 1300° C de façon à former, par décomposition de l'hydrocarbure, du carbone ou du graphite pyrolitique venant se déposer dans les vides ou pores de la structure.

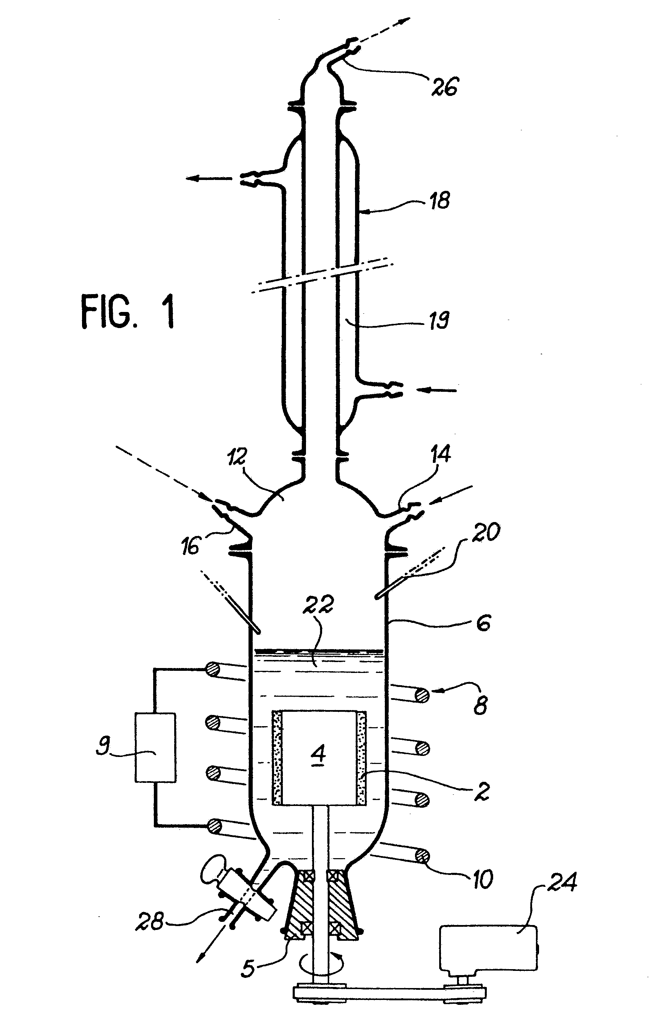

Sur la figure 1, on a représenté un dispositif permettant la mise en oeuvre du procédé de l'invention. La structure poreuse 2 à densifier est placée sur un support ou mandrin rotatif 4. Ce support ou mandrin, réalisé par exemple en graphite est monté dans la partie inférieure du corps du réacteur 6 comportant un bouchon 5 muni d'une ouverture à travers laquelle peut coulisser le support 4. Ce réacteur 6 est mis en chauffe au moyen d'un dispositif de chauffage par induction 8 constitué de bobines 10 dans lesquelles peut circuler un courant haute fréquence, fourni par un générateur 9. Le réacteur 6 est fermé à sa partie supérieure par une coiffe 12 munie d'un conduit 14 servant à l'introduction de l'hydrocarbure liquide dans le réacteur et d'un conduit 16 servant à introduire dans le réacteur un gaz neutre servant à chasser l'air contenu dans le réacteur.

Par ailleurs, la coiffe 12 est surmontée d'un condenseur 18 permettant la séparation de l'hydrocarbure, non consommé qui est récupéré et du gaz neutre qui est éliminé. La condensation des différentes vapeurs est assurée par une circulation d'eau dans la chemise 19 du condenseur.

Ce dispositif est, de plus, muni d'un système permettant de déterminer la température régnant dans le réacteur 6, ce système étant par exemple constitué de sondes de température 20 logées dans le corps du réacteur.

On va maintenant décrire une séquence de manipulation avec le dispositif tel que décrit précédemment. Cette manipulation consiste tout d'abord à placer la structure à densifier 2 sur son support rotatif 4 puis à fermer la partie supérieu-

re du réacteur 6 au moyen de la coiffe 12 surmontée du condenseur 18, le réacteur étant alors muni de son système de chauffage 8. Ceci fait, on peut remplir le réacteur 6 d'hydrocarbure liquide 22 jusqu'à l'immersion totale de la structure poreuse à densifier. L'ensemble de l'installation est ensuite balayé par un courant de gaz inerte permettant de chasser l'air présent dans l'installation. Après ouverture du circuit réfrigérant 18, le support 4 peut être mis en rotation au moyen d'un moteur 24 situé à l'extérieur du réacteur. Le réacteur peut alors être mis en chauffe au moyen du système de chauffage 8 puis maintenu quelques minutes à un palier de température. La mesure de ce palier de température est réalisée au moyen des sondes 20.

L'hydrocarbure liquide, porté en température, se vaporise puis se décompose en carbone ou en graphite pyrolytique et en hydrogène. Le carbone ou graphite pyrolytique peut alors se déposer à l'intérieur de la structure à densifier, tandis que l'hydrogène et l'hydrocarbure non décomposé sont évacués à la partie supérieure du réacteur. Les vapeurs d'hydrocarbure sont condensées dans le condenseur 18 prévu à cet effet et l'hydrogène est expulsé à l'extérieur par la conduite 26. Au bout d'une dizaine de minutes, on peut couper le chauffage puis laisser refroidir l'ensemble jusqu'à la température ambiante. Après vidange du réacteur au moyen d'un robinet 28 situé dans la partie inférieure du réacteur puis ouverture de ce dernier, l'extraction de la pièce densifiée peut avoir lieu.

Par analogie avec les phénomènes d'ébullition des différents liquides dans lesquels est immergé un corps chaud, il semble que l'on puisse définir différents stades pour cette expérience. Au début, l'hydrocarbure liquide est chauffé par convection naturelle et l'évaporation de celui-ci se produit seulement à la surface du liquide. L'ébullition du liquide se poursuit alors; des bulles de gaz se forment au niveau de la structure poreuse et s'élèvent à travers la masse liquide produisant des courants de circulation naturelle. A ce moment, la structure poreuse immergée est isolée du liquide par un film de vapeur. C'est alors que le gaz diffuse à travers la structure poreuse et qu'il y a formation de carbone ou de graphite pyrolytique.

Etant donné que le carbone ou le graphite se dépose en premier lieu au contact du mandrin, on obtient donc un gradient de densification de l'intérieur vers l'extérieur de la structure. Comme dans les procédés de l'art antérieur utilisant le dépôt en phase gazeuse, la vitesse de déposition du graphite et du carbone pyrolytique est proportionnelle à la concentration de l'hydrocarbure.

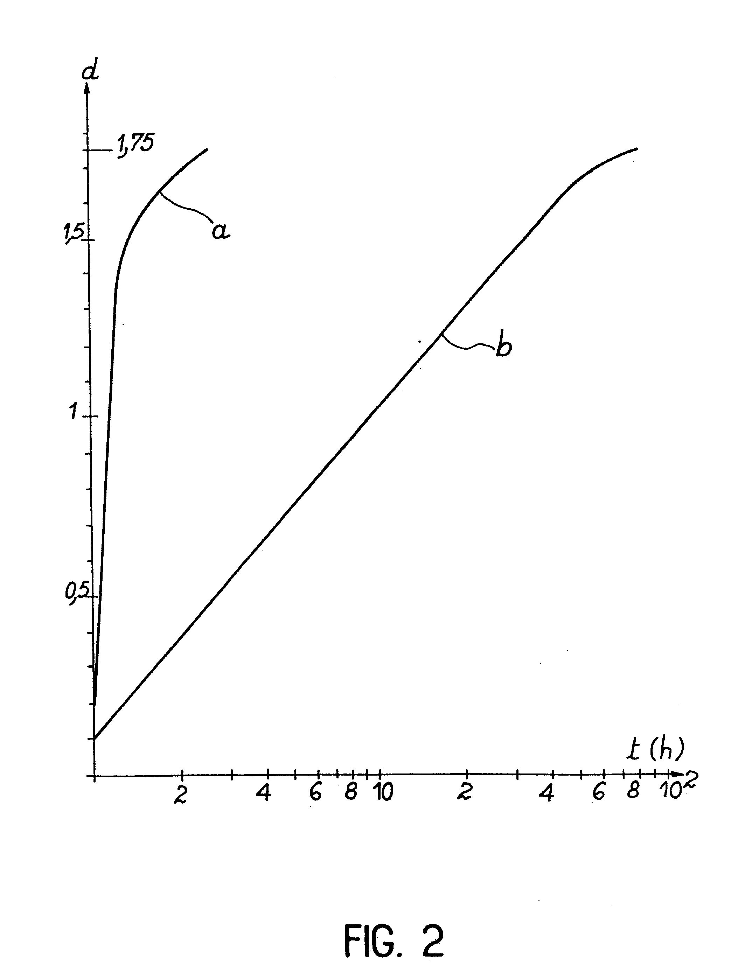

Sur la figure 2, on a représenté des courbes donnant la densité d d'une structure densifiée en fonction du temps t. La courbe a correspond à une densification conformément à l'invention et la courbe b à une densification par dépôt en phase gazeuse.

La courbe a a été établie en partant d'un tissu de carbone de densité initiale 0,1 et la courbe b a été établie en partant d'un feutre de carbone de densité initiale 0,1.

De la comparaison de ces deux courbes de densification, on peut dédouire que la vitesse moyenne d'imprégnation de la structure poreuse par le cyclohexane est environ 100 fois plus grande que celle obtenue par dépôt en phase gazeuse. Il est cependant à noter que les tissus sont toujours plus difficiles à imprégner que les feutres.

Par ailleurs, des études ont montré que des structures poreuses densifiées selon le procédé de l'invention présentent une texture et des caractéristiques physiques identiques à celles obtenues dans des structures poreuses densifiées selon les procédés de l'art antérieur.

## Revendications

1. Procédé de densification d'une structure poreuse par chauffage de la structure poreuse (2) en présence d'un hydrocarbure liquide (22) de façon à former, par décomposition de l'hydrocarbure, du carbone ou du graphite pyrolytique pouvant se déposer à l'intérieur des pores de la structure, caractérisé en ce que l'on immerge ladite structure poreuse (2) dans ledit hydrocarbure liquide (22) et en ce que l'on chauffe l'ensemble par induction (8).

2. Procédé de densification selon la revendication 1, caractérisé en ce que la structure poreuse est en carbone ou en graphite.

3. Procédé de densification selon l'une quelconque des revendications 1 et 2, caractérisé en ce que l'on chauffe l'ensemble à des températures comprises entre 1000 et 1300°C.

4. Procédé de densification selon l'une quelconque des revendications 1 à 3, caractérisé en ce que l'hydrocarbure liquide est du cyclohexane.

## Patentansprüche

1. Verfahren zum Verdichten eines porösen Körpers durch Erwärmen des porösen Körpers (2) in Anwesenheit eines flüssigen Kohlenwasserstoffs (22) derart, daß durch Aufspaltung des Kohlenwasserstoffs Kohlenstoff oder pyrolytisches Graphit gebildet wird, das sich im Innern der Poren des Körpers absetzen kann, dadurch gekennzeichnet, daß man den porösen Körper (2) in den flüssigen Kohlenwasserstoff (22) eintaucht und daß man die Gesamtanordnung durch Induktion (8) aufheizt.

2. Verfahren zum Verdichten nach Anspruch 1, dadurch gekennzeichnet, daß der poröse Körper aus Kohlenstoff oder Graphit besteht.

3. Verfahren zum Verdichten nach einem der Ansprüche 1 und 2, dadurch gekennzeichnet, daß man die Gesamtanordnung auf Temperaturen zwischen 1000 und 1300°C erhitzt.

4. Verfahren zum Verdichten nach einem der Ansprüche 1 bis 3, dadurch gekennzeichnet, daß der flüssige Kohlenwasserstoff Cyclohexan ist.

**Claims**

1. Process for the densification of a porous structure by heating the porous structure (2) in the presence of a liquid hydrocarbon (22) whereby the hydrocarbon decomposes to form carbon of pyrolytic graphite for deposition in the interior or the pores of the structure, characterized in that said porous structure (2) is immersed in said liquid hydrocarbon (22) and in that the assembly is heated by induction (8).

2. Densification process according to claim 1, characterized in that the porous structure comprises carbon or graphite.

3. Densification process according to either of claims 1 and 2, characterized in that the assembly is heated to temperatures between 1000 and 1300° C.

4. Densification process according to any one of claims 1 to 3, characterized in that the liquid hydrocarbon is cyclohexane.

FIG. 1

FIG. 2